(19) Europäisches Patentamt
European Patent Office
Office européen des brevets

(11) **EP 1 532 419 B1**

(12) **EUROPÄISCHE PATENTSCHRIFT**

(45) Veröffentlichungstag und Bekanntmachung des Hinweises auf die Patenterteilung:
**11.09.2019   Patentblatt 2019/37**

(51) Int Cl.:
**G01B 5/008** *(2006.01)*     **G01B 21/20** *(2006.01)*

(21) Anmeldenummer: **03790806.8**

(86) Internationale Anmeldenummer:
**PCT/EP2003/007976**

(22) Anmeldetag: **22.07.2003**

(87) Internationale Veröffentlichungsnummer:
**WO 2004/020935 (11.03.2004 Gazette 2004/11)**

(54) **KOORDINATENMESSGERÄT UND VERFAHREN ZUR VERMESSUNG EINES WERKSTÜCKES**

COORDINATE MEASURING DEVICE AND METHOD FOR MEASURING A WORKPIECE

DISPOSITIF DE MESURE DE COORDONNÉES ET PROCÉDÉ DE MESURE D'UNE PIÈCE

(84) Benannte Vertragsstaaten:
**DE FR GB IT**

(30) Priorität: **31.08.2002   DE 10240307**

(43) Veröffentlichungstag der Anmeldung:
**25.05.2005   Patentblatt 2005/21**

(73) Patentinhaber: **Carl Zeiss Industrielle Messtechnik GmbH**
**73447 Oberkochen (DE)**

(72) Erfinder:
• **GÖRSCH, Daniel**
**01309 Dresden (DE)**
• **LOTZE, Andreas**
**01309 Dresden (DE)**

(74) Vertreter: **Henckell, Carsten**
**Carl Zeiss**
**Patentabteilung**
**73446 Oberkochen (DE)**

(56) Entgegenhaltungen:
**WO-A- 00/06969     US-A- 4 908 782**
**US-A- 5 521 847**

• **BARR ALAN H : "GLOBAL AND LOCAL DEFORMATIONS OF SOLID PRIMITIVES " COMPUTER GRAPHICS (ACM) , Bd. 18, Juli 1984 (1984-07), Seiten 21-30, XP002267388**

**Beschreibung**

Die Erfindung betrifft ein Verfahren zur Vermessung eines zu vermessenden Werkstückes mit fluiddynamischem Profil nach Anspruch 1. Dabei wird zur Vermessung derart vorgegangen, dass Messpunkte auf der Oberfläche des zu vermessenden Werkstückes mit einem Messgerät gemessen werden und diese gemessenen Messpunkte dann derart ausgewertet werden, dass eine vorgegebene Sollgeometrie des zu vermessenden Werkstückes und eine durch die gemessenen Messpunkte definierte Istgeometrie über ein Einpassungsverfahren aufeinander abgebildet werden, um dann hieraus zu prüfende Merkmale des zu vermessenden Werkstückes abzuleiten. Die Erfindung betrifft ferner ein entsprechendes Messgerät nach Anspruch 5, mit dem ein solches Verfahren durchgeführt werden kann.

Aus dem Stand der Technik sind in der Fachwelt als "Best-Fit"-Einpassung bezeichnete Verfahren hinlänglich bekannt.

Hierzu wird üblicherweise die am zu vermessenden Werkstück zu prüfende Sollgeometrie vorgegeben, wobei die vorgegebene Sollgeometrie durch entsprechende Geometrieparameter, wie beispielsweise anzutastende Punkte, beschrieben wird. Handelt es sich bei dem aus der gemessenen Istgeometrie zu bestimmenden Prüfmerkmal beispielsweise um den Durchmesser einer Bohrung, der einen definierten Nenndurchmesser nicht unterschreiten darf, so wird man als einzupassende Sollgeometrie einen Kreis mit vorgegebenem Minimaldurchmesserbeschreiben.

Entweder die Sollgeometrie oder aber die Istgeometrie, die durch die am Werkstück gemessenen Messpunkte definiert ist, wird dann so rotiert und verschoben, dass diese bestmöglich ineinander eingepasst werden, um dann festzustellen, ob die Abweichung der gemessenen Meßpunkte gegenüber der eingepassten vorgegebenen Sollgeometrie ausreichend ist. Wenn die Sollgeometrie verschoben wird, werden bei diesem Einpassvorgang Parameter für eine Rotationsmatrix, wie auch Parameter für einen Translationsvektor bestimmt, die die Rotation und die Translation der vorgegebenen Sollgeometrie in Richtung der gemessenen Messpunkte derart beschreiben, dass die Sollgeometrie bestmöglich auf den gemessenen Punkten zum liegen

kommt. Wenn hingegen die Istgeometrie verschoben wird, werden bei diesem Einpassvorgang Parameter für eine Rotationsmatrix, wie auch Parameter für einen Translationsvektor bestimmt, die die Rotation und die Translation der Istgeometrie, oder genauer gesagt, der Messpunkte in Richtung der vorgegebenen Sollgeometrie derart beschreiben, dass die Messpunkte bestmöglich auf der vorgegebenen Sollgeometrie zum liegen kommen.

Um diese Parameter zu bestimmen wird üblicherweise das Gaußsche Verfahren der Ideinsten Fehlerquadrate verwendet, wobei die Parameter der Rotationsmatrix und des Translationvektors derart bestimmt werden, so dass die Summe der Abstandsquadrate zwischen den gemessenen Messpunkten und der vorgegebenen Sollgeometrie minimal wird. Alternativ kann auch das Verfahren von Tschebyscheff verwendet werden, bei dem der maximale Betrag des Abstands zwischen einem gemessenen Messpunkt und der vorgegebenen Geometrie zu minimieren oder in eine vorgegebene Toleranzzone einzupassen ist.

In etwas anders gelagerten Fällen, wie sie sich beispielsweise bei Bohrungsdurchmessern ergeben, können neben den die Sollgeometrie beschreibenden Parametern zusätzlich auch Skalierungsparameter vorgesehen werden, die die Skalierung der Sollgeometrie oder der Istgeometrie beschreiben, sodass dann über das betreffende Einpassverfahren nicht nur die Parameter der Rotationsmatrix und des Translationsvektors bestimmt werden, sondern auch Skalierungsparameter, die die Skalierung der Sollgeometrie oder der Istgeometrie beschreiben. Ein solcher Skalierungsparameter ist beispielsweise der Radius eines eingepassten Kreises.

Über die oben beschriebenen, hinlänglich bekannten Verfahren, lassen sich die Abweichungen zwischen den tatsächlich gemessenen Messpunkten und einer vorgegebenen Sollgeometrie auf relativ einfache Weise feststellen. Die bekannten Verfahren versagen jedoch völlig, wenn die Istgeometrie des zu vermessenden Werkstückes gegenüber der vorgegebenen Sollgeometrie abweicht. Hierfür kann es unterschiedlichste Gründe geben. Beispielsweise verändern Werkstücke, die in der Kunststoff-Industrie hergestellt wurden, oftmals längere Zeit nach dem eigentlichen Herstellungsprozess ihre Geometrie. Andererseits ist es jedoch wünschenswert möglichst frühzeitig zu überprüfen, ob die vorgegebenen Fertigungstoleranzen eingehalten sind, damit der Herstellungsprozess gegebenenfalls nachgeregelt werden kann. Es ist jedoch mit den herkömmlichen Verfahren nicht möglich, derartige Veränderungen des gefertigten Werkstückes nachzubilden.

Ein weiteres Beispiel für solche Abweichungen kann das Tiefziehverfahren von Metallblechen genannt werden. Hierdurch kommt es aufgrund der beim Tiefziehvorgang entstehenden Verspannungen im Werkstück zu Verwindungen des Werkstücks. Obwohl das tiefgezogene Werkstück nicht mit der vorgegebenen Sollgeometrie übereinstimmt, kann das Werkstück dennoch, wenn es bestimmungsgemäß eingebaut wurde, die vorgesehene Sollgeometrie aufweisen. Ähnliche Effekte können bei metallischen Werkstücken auftreten, die sich aufgrund der beim Fertigungsprozess auftretenden Temperaturen verwinden und nach dem vollständigen Auskühlen ihre endgültige Form aufweisen.

Ein weiteres Problemfeld zeigen Werkstücke mit fluiddynamischen Profilen, wie beispielsweise die Profile einer Turbinenschaufel. Die Einpassung einer vorgegebenen Sollgeometrie eines Turbinenschaufelprofils in die Istgeometrie eines tatsächlich gemessenen Turbinenschaufelprofils, das durch die Messpunkte definiert ist, ist häufig sehr problematisch, da das tatsächlich gemessene Turbinenschaufelprofil oftmals kürzer oder länger als die vorgegebene Sollgeometrie ist; da die Toleranzen der Formabweichungen üblicherweise sehr klein sind, die zulässigen Längenabweichungen andererseits jedoch sehr groß sind, entsteht ein Widerspruch zwischen Formabweichungen und Längenabweichungen insbesondere im Bereich der spitzwinkligen Austrittskante des Turbinenschaufelprofils, so dass eine sinnvolle Einpassung der Sollgeometrie deshalb nicht möglich ist. Einpassverfahren für fluiddynamische Profile sind beispielsweise aus WO 00/06969 A, US 4 908 782 A oder US 5 521 847 A bekannt.

Ausgehend von den bekannten Einpassverfahren liegt der Erfindung deshalb die Aufgabe zu Grunde ein Einpassungsverfahren der eingangs genannten Art vorzuschlagen, mit dem eine vorgegebene Sollgeometrie und eine durch gemessene Messpunkte definierte Istgeometrie eines zu vermessenden Werkstückes mit fluiddynamischem Profil auch dann aufeinander abgebildet werden können, wenn die Form der durch die Messpunkte definierten tatsächlichen Istgeometrie gegenüber der vorgegebenen Sollgeometrie abweicht.

Die Aufgabe wird durch ein Verfahren gemäß dem unabhängigen Anspruch 1, sowie ein entsprechendes Messgerät gemäß dem unabhängigen Anspruch 5 gelöst.

Die Besonderheit des lösungsgemäßen Verfahrens und des lösungsgemäßen Messgerätes ist hierbei darin zu sehen, dass ein Einpassungsverfahren verwendet wird, bei dem neben der vorgegebenen Sollgeometrie und optional vorhandenen Skalierungsparametern zusätzlich verallgemeinerte Transformationsparameter vorgesehen sind, die eine über die reine Skalierung der Sollgeometrie oder der Istgeometrie hinausgehende Transformation der Sollgeometrie oder der Istgeometrie bezüglich einer anzustrebenden geometrischen Formänderung der Sollgeometrie oder der Istgeometrie beschreiben.

Parameter zur Skalierung der Sollgeometrie oder der Istgeometrie bedeutet hierbei, dass über diese Parameter die Größenverhältnisse der Sollgeometrie oder der Istgeometrie geändert werden können, ohne jedoch die eigentliche charakteristische Form der Sollgeometrie oder der Istgeometrie zu verändern. Beispielsweise kann es sich bei einem Kreis als Sollgeometrie um den Radius des Kreises handeln oder bei einem Langloch mit halbkreisförmigen Enden als Sollgeometrie um den Radius der beiden das Langloch begrenzenden Halbkreise oder den Abstand der Mittelpunkte dieser Halbkreise. Wie bereits eingangs beschrieben sind derartige Parameter zur Skalierung der Sollgeometrie oder der Istgeometrie optional, das heißt also, dass solche Parameter zur Ausführung der Erfindung nicht notwendig sind.

Andererseits können durch eine verallgemeinerte und zusätzliche Transformation der gemessenen und durch Gestaltänderung oder andere Vorgänge verfälschte Istgeometrie die entstehenden Messfehler und damit die Abweichung zwischen Sollgeometrie und tatsächlicher Istgeometrie minimiert werden.

Die Bezeichnung dass eine vorgegebene Sollgeometrie und eine durch die gemessenen Messpunkte definierte Istgeometrie über ein Einpassungsverfahren aufeinander abgebildet werden soll hierbei ausdrücken, dass sowohl die Sollgeometrie auf der Istgeometrie abgebildet werden kann, wie auch die durch die gemessenen Messpunkte definierte Istgeometrie auf der Sollgeometrie abgebildet werden kann. Istgeometrie kann hierbei sowohl die gemessenen Messpunkte selber bedeuten; es kann sich jedoch genauso gut auch um eine aus den Messpunkten abgeleitete Geometrie, wie beispielsweise den Mittelpunkt eines Kreises handeln, der aus den Messpunkten einer Bohrung ermittelt wurde.

Die Besonderheit eines beispielhaften Einpassungsverfahrens ist hierbei darin zu sehen, dass durch die zusätzlichen Transformationsparameter eine nahezu beliebig vorgebbare Gestaltänderung der vorgegebenen Sollgeometrie oder der Istgeometrie herbeigeführt werden kann. Die Transformationsparameter sollten hierbei so gewählt werden, dass die Verformung der Sollgeometrie oder der Istgeometrie so beeinflusst wird, dass diese sich zweckmäßig an die jeweils unverformte Istgeometrie bzw. Sollgeometrie anpassen kann. Beispielsweise kann für ein tiefgezogenes Werkstück eine Transformation modelliert werden, über die die Deformationen in der Istgeometrie eines gemessenen Werkstückes, die sich durch das Tiefziehen des Werkstückes ergeben in Richtung einer unverformten Sollgeometrie nachgebildet werden.

In einem anderen Beispiel kann über die Transformationsparameter eine zeitabhängige Deformation des zu vermessenden Werkstückes, wie beispielsweise eines Kunststoffteils, nachgebildet werden. Hierbei können die zusätzlichen Transformationsparameter eine Verlängerung der Sollgeometrie in beispielsweise genau einer Richtung zulassen.

In dem erfindungsgemäßen Verfahren ist die zu vermessende Sollgeometrie des Werkstückes ein fluiddynamisches Profil, also das Profil eines Werkstückes, das zur Relativbewegung gegenüber einem Fluid, wie beispielsweise Luft oder Wasser vorgesehen ist, um hierdurch Kräfte zu erzeugen. Beispielsweise könnte es sich um das Profil einer Flugzeugtragfläche, das Profil eines Hubschrauber-Rotorblattes, das Profil eines Flugzeug-Propellerblattes, um das Profil eines Schiffsschraubenblattes oder das Profils eines Rotorblattes von einem Windkraftwerk handeln. Besonders vorteilhaft kann das Verfahren insbesondere beim Profil einer Turbinenschaufel eingesetzt werden. Die Transformationsparameter definieren hierbei eine Verschiebung von Punkten der Sollgeometrie des fluiddynamischen Profils entlang einer gekrümmten Verschiebelinie, derart, dass der Abstand der Punkte zur gekrümmten Verschiebelinie konstant bleibt und dies damit zu einer definierten Profilstreckung oder Profilstauchung führt.

Die gekrümmte Verschiebelinie sollte vorteilhaft so gewählt werden, dass diese im wesentlichen die Mittellinie der Sollgeometrie des Profils approximiert. Insbesondere eine Kreislinie eignet sich als eine die Mittellinie approximierende Verschiebelinie.

Zur Verschiebung der Punkte wird erfindungsgemäß die Sollgeometrie des fluiddynamischen Profils in zwei Teile geteilt, wobei die Transformationsparameter eine Verschiebung der Punkte der beiden Teile entlang der gekrümmten Verschiebelinie in unterschiedliche Richtungen erlauben. Der Verschiebeweg der Punkte entlang der Verschiebelinie sollte hierbei für alle Punkte des ersten Teils gleich sein und für alle Punkte des zweiten Teils gleich sein.

Alternativ könnte die Verschiebung auch so vorgenommen werden, dass eine echte Profilstreckung auftritt. Hierbei könnten beispielsweise ausgehend von einem definierten Zentralpunkt des Profils aus, der vorzugsweise auf der Verschiebelinie liegt, wie beispielsweise der Schnittpunkt der Eintrittskante des Profils mit der Verschiebelinie, die restlichen Punkte gestreckt werden. Die Verschiebung dieser Punkte entlang der Verschiebelinie erfolgt hierbei proportional zum Weg des betreffenden zu verschiebenden Punktes zum Zentralpunkt, gemessen beispielsweise als Weg entlang der Verschiebelinie. Dieser Weg könnte bestimmt werden, indem vom zu verschiebenden Punkt aus und, wenn der Zentralpunkt von der Verschiebelinie entfernt ist, auch vom Zentralpunkt aus, das Lot auf die Verschiebelinie gefällt wird, und der Weg entlang der Verschiebelinie zwischen diesen der Lotpunkten bestimmt wird.

Weitere Vorteile und Weiterbildungen der Erfindung ergeben sich aus der nun folgenden Figurenbeschreibung. Hierin zeigen:

Figur 1: Ein Messgerät, insbesondere ein Koordinatenmessgerät zur Aufnahme der Messpunkte eines Werkstückes (7);

Figur 2: die Sollgeometrie eines zu vermessenden Werkstückes (7);

Figur 3: eine tatsächliche Geometrie des zu vermessenden Werkstückes (7) gemäß Figur 2;

Figur 4: eine schematische Darstellung zur Modellierung der Transformationsparameter (a, λ) für ein Werkstück (7) gemäß Figuren 2+3;

Figur 5: ein Ausführungsbeispiel einer erfindungsgemäßen Einpassung mit einer Sollgeometrie (22) in Form eines Profils einer Turbinenschaufel

Figur 6: ein Beispiel einer Sollgeometrie (18) eines tiefgezogenen Werkstückes;

Figur 7: Darstellung der gemessenen Meßpunkte (20) eines realen Werkstückes und der Sollgeometrie (18) gemäß Figur 8; und

Figur8: Darstellung der Messpunkte (20) eines real gemessenen Werkstückes und der eingepassten Sollgeometrie (21), die über eine Ähnlichkeitstransformation an die Messpunkte (20) des realen Werkstückes angepasst wurden.

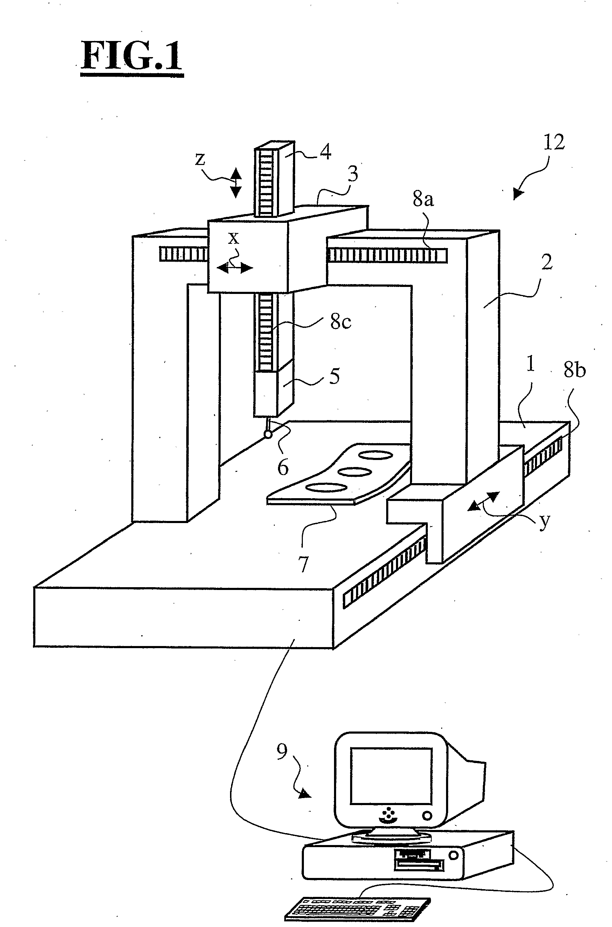

Fig. 1 zeigt rein schematisch ein Messgerät zur Aufnahme von Messpunkten eines zu vermessenden Werkstückes (7), das hier rein beispielhaft als Koordinatenmessgerät ausgebildet ist. Das Messgerät weist ein Portal 2 auf, das in Richtung des Pfeils (y) motorisch gegenüber einem Messtisch (1) verfahren werden kann und dessen Position sich gegenüber einem Maßstab (8b) messen lässt. Entlang der den Messtisch (1) überspannenden Traverse des Portals 2 ist ein in Richtung des Pfeils (x) motorisch verfahrbarer Schlitten (3) vorgesehen, dessen Position an dem Maßstab (8a) abgegriffen werden kann, wobei hieran wiederum eine in Richtung des Pfeils (z) motorisch verfahrbare Pinole (4) gelagert ist, deren Position am Maßstab (8c) abgegriffen werden kann. Am unteren Ende der Pinole (4) befindet sich ein Tastkopf (5) mit einem Taststift (6) der gegenüber dem Tastkopf (5) in den drei Koordinatenrichtungen (x, y, z) ausgelenkt werden kann. Aus den abgelesenen Werten der Maßstäbe (8a-c) und den Auslenkungen des Taststiftes (6) gegenüber dem Tastkopf (5) können dann angetastete Messpunkte des Werkstückes (7) ermittelt werden. Die Steuerung dieses Koordinatenmessgerätes (12), wie auch die erfindungsgemäße

Auswertung der hierbei ermittelten Messwerte erfolgt in dem sowohl als Steuereinheit wie auch als Auswertungseinheit verwendeten Rechner (9).

Natürlich kann anstelle des gezeigten Koordinatenmessgerätes auch ein völlig anderes Messgerät zur Aufnahme der Messpunkte verwendet werden. Es könnte ein anderer Tastkopf, wie beispielsweise ein sogenannter schaltender Tastkopf, der nur eine Berührung mit dem Werkstück feststellt oder ein optischer Tastkopf verwendet werden. Auch die Mechanik zum Bewegen des Tastkopfes (5) gegenüber dem Werkstück (7) könnte ebenfalls völlig anders ausgebildet sein. Es könnte sich beispielsweise um eine Brückenmechanik oder Ständermechanik oder eine Mechanik mit Drehgelenken handeln; alternativ könnte auch der Messtisch (1) in einer oder mehreren Richtungen verschieblich gelagert sein, so dass dann das Werkstück (7) und nicht der Tastkopf (5) in der betreffenden Richtung bewegt wird. Des weiteren muss es sich auch nicht um ein Koordinatenmessgerät handeln; Es genügt für einfachere Messaufgaben auch ein Messgerät, mit dem das Werkstück nur zweidimensional vermessen wird. Dient als Tastkopf hierbei eine Videokamera, so muss noch nicht einmal der Tastkopf relativ zum zu vermessenden Werkstück bewegt werden.

Wie eine derartige Ähnlichkeitstransformation mit entsprechenden Transformationsparametern, die eine definierte Transformation der Sollgeometrie bezüglich einer anzustrebenden geometrischen Formänderung der Sollgeometrie zulassen, in der Auswertungseinheit, also dem Rechner (9), vor sich geht, soll nunmehr im Folgenden detailliert beschrieben werden.

So sei (x) ein einzelner angegebener Sollpunkt einer Sollgeometrie, sowie f(x) seine Abstandsfunktion, also sein Abstand zu dem ihm zugeordneten Messpunkt.

Im Fall der herkömmlichen Standardeinpassung kann die vorgegebene Geometrie neben der eigentlichen Sollgeometrie zusätzlich Parameter bzw. einen Parametervektor $\mu \in R''$ enthalten, der eine Skalierung der Sollgeometrie beschreibt. Es gilt also:

$$\text{Gleichung 1: } x = x(\mu)$$

Zusätzlich wird die vorgegebene Geometrie einer linearen Koordinatentransformation unterworfen. Diese besteht aus einer Translation über einen Translationsvektor $\boldsymbol{c} \in R^3$ und einer Rotation über eine Rotationsmatrix $\boldsymbol{Q}(\varepsilon) \in R^{3x3}$. Der Parametervektor $\varepsilon \in R^3$ beinhaltet dabei die drei Rotationswinkel ($\alpha$, $\beta$, $\gamma$) um die x-Achse, y-Achse und z-Achse, aus denen die Matrix ($\boldsymbol{Q}(\varepsilon)$) gebildet wird. Fasst man die beschriebenen Parameter zu einem Vektor $\boldsymbol{g} = (\mu, \varepsilon, c)^T$ (T steht für transponiert) zusammen, so lautet das zu lösende Minimierungsproblem für die Minimierung nach dem Gaußschen Verfahren der kleinsten Fehlerquadrate, wenn f($\boldsymbol{Q}(\varepsilon)\boldsymbol{x}(\mu)+\boldsymbol{c}$), der Abstand eines Messpunktes von einem über die Funktion

$u(\varepsilon, \mu, c) = \boldsymbol{Q}(\varepsilon)\boldsymbol{x}(\mu)+c$ transformierten Sollpunktes (x) ist:

$$\text{Gleichung 2:} F_G(g) = \sum_{\text{Messpunkte}} f^2(\boldsymbol{Q}(\varepsilon)x(\mu) + \boldsymbol{c}) = Min!$$

Nutzt man hingegen den Ansatz nach Tschebyscheff, so lautet das zu lösende Minimierungsproblem.:

$$\text{Gleichung 3: } F_T(g) = \underset{\text{Messpunkte}}{Max} \; |f(\boldsymbol{Q}(\varepsilon)x(\mu) + \boldsymbol{c})| = Min!$$

Der Ansatz gemäß Gleichung 2 oder Gleichung 3 kann nunmehr in bekannter Weise gelöst werden. Das Minimum lässt sich nach bekannten numerischen Verfahren, wie beispielsweise Newton-Raphson bestimmen, wobei für die hierbei auftretenden linearen Minimierungsprobleme dann das Simplex- oder das Householderverfahren verwendet werden. Die Parameter des Translationsvektors (c), der Rotationsmatrix ($\boldsymbol{Q}(\varepsilon)$) und des Parametervektors ($\mu$) werden hierbei iterativ ermittelt.

Gegenüber diesem herkömmlichen Ansatz, der in der Messtechnik bereits schon seit langem gängig benutzt wird, können zusätzlich Transformationsparameter (q) vorgesehen sein, die eine Transformationsvorschrift (T(q)) für eine Ähnlichkeitstransformation der vorgegebenen Geometrie (x($\mu$)) beschreiben, wobei die Transformationsparameter (q) als Vektor $q \in R^m$ parametrisierbar sind.

Damit stellt sich der Ansatz nach Gauß wie folgt dar:

$$\text{Gleichung 4: } F_G^*(q,g) = \sum_{\text{Messpunkte}} f^2(\boldsymbol{Q}(\varepsilon)\boldsymbol{T}(q,\boldsymbol{x}(\mu)) + \boldsymbol{c}) = Min!$$

Der entsprechende Ansatz nach Tschebyscheff lautet:

$$\text{Gleichung 5: } F_T^*(q,g) = \underset{\text{Messpunkte}}{Max} \; |f(\boldsymbol{Q}(\varepsilon)\boldsymbol{T}(q,\boldsymbol{x}(\mu)) + \boldsymbol{c})| = Min!$$

Die Gleichung kann analog zu oben im Zusammenhang mit Gleichungen 2 und 3 genannter Vorgehensweise gelöst werden.

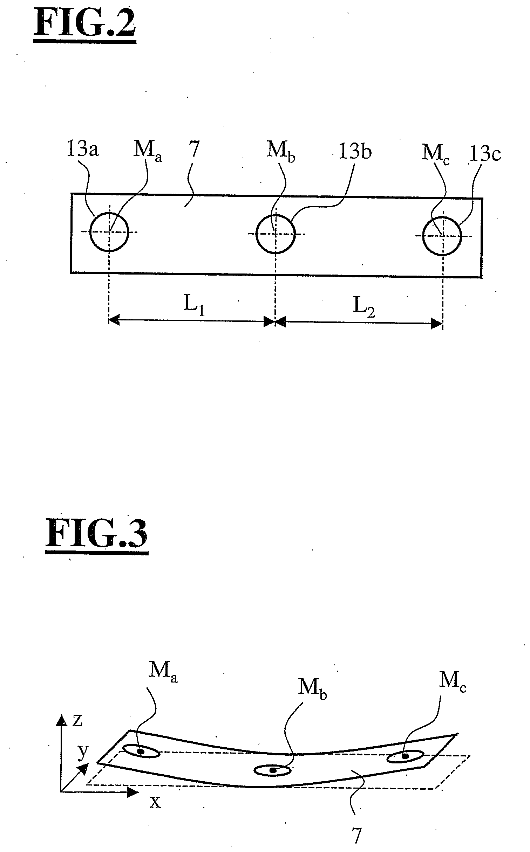

Anhand der Fig. 2 - 4 soll nunmehr ein erstes konkretes Beispiel dieses Verfahrens gezeigt werden. In Fig. 2 ist hierbei die Sollgeometrie eines Werkstückes (7) gezeigt. Das Werkstück ist hierbei ein flaches Metallblech, in das drei Löcher (13a, 13b und 13c) eingestanzt sind. Bei dem Metallblech kommt es hierbei insbesondere auf den Abstand der Mittelpunkte $\overline{M_aM_b}$ und $\overline{M_bM_c}$ an, die hierbei durch die Bezugszeichen ($L_{1\,soll}$ und $L_{2\,soll}$) dargestellt sind. Im tatsächlichen Fertigungsbetrieb wird sich das Blechteil, das üblicherweise durch Stanzwerkzeuge bearbeitet wird, in Folge der hierdurch entstehenden Eigenspannungen durchbiegen, wie dies Fig. 3 zeigt. Die strichliniert gezeichnete Linie ist hierbei die Form, die sich ergeben würde, wenn das Werkstück (7) auf eine ebene Unterlage gegeben würde und an den beiden Enden eine Kraft ausgeübt würde, sodass das Werkstück (7) sich in eine ebene Position verformt. Die ausgezogene Linie zeigt die tatsächliche Kontur des Werkstückes (7).

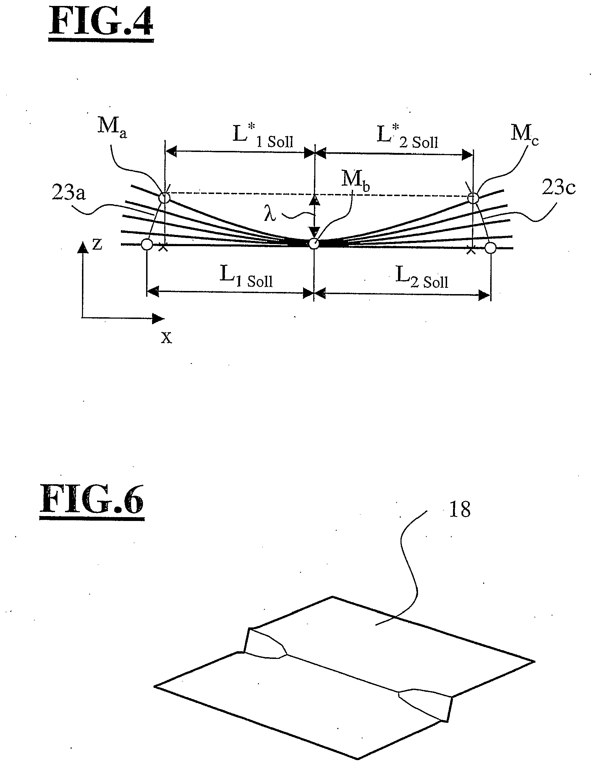

Im Sinne einer Modellbildung dieser physikalischen Situation lässt sich die Verformung des Blechbandes als in y-Richtung (in Figur 4 lotrecht zur Blattebene) konstant ansehen und man erhält so die in Figur 4 dargestellte Problemstellung. Hierin ist modelliert, wie sich die Sollgeometrie des Werkstückes bei einer Bearbeitung des Werkstückes theoretisch verformen

müsste, sodass die Sollgeometrie in eine Position verformt wird, die einem tatsächlich vermessen Werkstück entspricht. Hierbei bewegen sich die Mittelpunkte ($M_a$ und $M_c$) auf Bahnen (23a) und (23c). Die tatsächlich gemessenen Abstände eines Werkstückes (7) zwischen den Mittelpunkten ($M_a$ und $M_b$) bzw. zwischen ($M_b$ und $M_c$) der Löcher (13a, 13b und 13c) werden mit ($L^*_{1\,Ist}$ und $L^*_{2\,Ist}$) bezeichnet und entsprechen den in Figur 4 eingezeichneten Abständen ($L^*_{1\,Soll}$ und $L^*_{2\,Soll}$) der verbogenen Sollgeometrie. Die Abstände ($L^*_{1\,Ist}$ und $L^*_{2\,Ist}$) wurden der Übersichtlichkeit halber nicht in die Figur 4 eingezeichnet. Diese gemessenen Abstände ($L^*_{1\,Ist}$ und $L^*_{2\,Ist}$) des Werkstückes (7) sind gegenüber den wahren Abständen ($L_{1\,Ist}$ und $L_{2\,Ist}$) (ebenfalls nicht in Figur 4 eingezeichnet) analog zur in Figur 4 dargestellten Sollgeometrie aufgrund der Verformung des Werkstückes (7) verkürzt.

Es sei hierbei bei der Modellbildung zur Vereinfachung angenommen, dass die Abstände ($L_{1\,Soll}$ und $L_{2\,Soll}$) der Mittelpunkte ($\overline{M_aM_b}$ und $\overline{M_bM_c}$) gleich seien, so dass

($L_{1\,Soll}=L_{2\,Soll}$) und der Mittelpunkt ($M_b$) genau auf der x-Achse liege. Ziel der Erstellung einer Ähnlichkeitstransformation muss es in dem hier gezeigten Beispiel demnach sein, diese Deformation im Rahmen einer "Best-Fit"- Einpassung zu modellieren. Dazu ist es notwendig das Biegeverhalten des Werkstückes (7) analytisch zu erfassen. Dies gelingt mittels des Ansatzes

$$\text{Gleichung 6: } T(\lambda, a; t) = \begin{pmatrix} x(t) \\ z(t; \lambda, a) \end{pmatrix} = \begin{pmatrix} t \\ \lambda \cos\left(\frac{\pi}{2a} t\right) \end{pmatrix}$$

Die Form des Werkstückes (7) $T(\lambda, a; t)$ hängt dabei von den nachfolgenden Größen ab:

- Die Variable (t) ist der Parameter der Kurve $T(\lambda, a; t)$, über den die Kurve $T(\lambda, a; t)$ parametrisiert ist.

- Der Parameter ($\lambda$) bezeichnet die Durchbiegung, die sich bei einer gleichmäßigen Verbiegung der an sich ebenen Sollgeometrie des Bandes zum tatsächlich gebogenen Werkstück (7) ergibt, wobei diese Verbiegung in der Bandmitte gemessen wird und diese sich aus dem Abstand der Verbindungslinie zwischen den Mittelpunkten ($M_a$ und $M_c$) und dem Mittelpunkt ($M_b$) ergibt, und als Abstand zur x-Aclise bestimmt werden kann.

- Der Parameter (a) repräsentiert den Abstand zwischen den Mittelpunkten ($M_a$ und $M_b$) bzw. den als gleich groß angenommenen Abstand zwischen den Mittelpunkten ($M_b$ und $M_c$) der auf die x-Achse projizierten verbogenen Sollgeometrie des Blechbandes, der natürlich in Abhängigkeit der Durchbiegung ($\lambda$) variiert. (siehe Figur 4).

Zur Korrektur des entstehenden Messfehlers aus der Verkürzung der gemessenen Strecken ($L^*_{1\,Ist}$ und $L^*_{2\,Ist}$) gegenüber den wahren Längen ($L_{1\,Ist}$ und $L_{2\,Ist}$) können die weiter oben dargelegten Wege beschritten werden, und zwar sowohl die Transformation der Istgeometrie zur Sollgeometrie, als auch umgekehrt. Folgend wird der Fall für die Transformation der Sollgeometrie zur Anpassung an die Istgeometrie dargelegt:
Im Rahmen der "Best-Fit"-Einpassung weist damit der Vektor (q) die Parameter (a und $\lambda$) auf, die eine über die reine Skalierung der Sollgeometrie hinausgehende definierte Transformation der Sollgeometrie, also des ebenen Blechbandes, bezüglich einer anzustrebenden geometrischen Formänderung der Sollgeometrie zulassen.

Die Parameter des Vektors (q), also die Durchbiegung ($\lambda$) und die Integrationsgrenzen (a) werden zur Anpassung der vorgegebenen Gestalt an die Messdaten (gebogenes Band) optimiert.

Darüber hinaus erfolgt eine Rotation gemäß den Winkeln des Parametervektors ($\varepsilon$) und eine Translation gemäß dem Vektor (c) der vorgegebenen Geometrie im Sinne der Standardeinpassung. Da hierbei ein zweidimensionales Problem vorliegt und eine Rotation nur um die y-Achse stattfinden kann, ist der oben bezeichnete Parametervektor ($\varepsilon$) für die Rotationsmatrix ($\mathbf{Q}(\varepsilon)$) nur eindimensional, wobei es sich hierbei um den Rotationswinkel ($\beta$) handelt, so das sich die entsprechende Rotationsmatrix ($Q(\beta)$) wie folgt ergibt:

$$\text{Gleichung 7: } \mathbf{Q}(\beta) = \begin{pmatrix} \cos(\beta) & \sin(\beta) \\ -\sin(\beta) & \cos(\beta) \end{pmatrix}$$

Der Translationsvektor (**c**) lässt im vorgesehenen zweidimensionalen Fall nur eine Translation in die Achsrichtungen (x und z) zu, so dass der Translationsvektor (**c**) sich wie folgt ergibt:

$$\text{Gleichung 8: } \mathbf{c} = \begin{pmatrix} c_x \\ c_z \end{pmatrix}$$

Man erhält somit folgende Gestallt des Blechbandmodells:

$$\text{Gleichung 9: } u_{\text{BestFit}}(t; \lambda, a, Q, c) = \mathbf{Q}(\beta)\,\mathbf{T}(\lambda, a; t) + \mathbf{c}$$

Bzw. ausführlich dargestellt:

$$\text{Gleichung 10: } u_{\text{BestFit}}(t; \lambda, a, \beta, c_x, c_z) = \begin{pmatrix} \cos(\beta) & \sin(\beta) \\ -\sin(\beta) & \cos(\beta) \end{pmatrix} \begin{pmatrix} t \\ \lambda \cos\left(\dfrac{\pi}{2a}t\right) \end{pmatrix} + \begin{pmatrix} c_x \\ c_z \end{pmatrix}$$

Das erhaltene Modell besitzt fünf Freiheitsgrade, die die zur "Best-Fit"-Einpassung zu verwendende Ähnlichkeitstransformation beschreiben.

Die Einpassung kann nunmehr derart erfolgen, indem am gebogenen Werkstück (7) die Löcher (13a, 13b und 13c) gemessen werden und hieraus die Mittelpunkte ($M_a$, $M_b$ und $M_c$) bestimmt werden. Nunmehr kann für jeden der drei ermittelten Mittelpunkte ($M_a$, $M_b$ und $M_c$) die Abstandsfunktion f($u_{\text{BestFit}}$) zwischen der gemäß Gleichung 10 definierten Funktion $u_{\text{BestFit}}$(t; $\lambda$, a, $\beta$, $c_x$, $c_z$) und dem jeweiligen Mittelpunkt ($M_a$, $M_b$ und $M_c$) formuliert werden. Über den oben bereits im Zusammenhang mit Gleichung 3 beschriebenen Ansatz nach Gauß, die Summe der Quadrate der so ermittelten Abstandsfunktionen zu minimieren, können dann gemäß dem ebenfalls im Zusammenhang mit Gleichung 3 beschriebenen Vorgehen die Parameter ($\lambda$, a, $\beta$, $c_x$, $c_z$) ermittelt werden. Darüber hinaus sind die Kurvenparameter ($t_a$, $t_b$, $t_c$) bekannt, die die Lage der Mittelpunkte ($M_a$, $M_b$ und $M_c$) auf der gemäß Gleichung 6 definierten Funktion wiedergeben. Die wahren Abstände ($L_{1\,\text{Ist}}$ und $L_{2\,\text{Ist}}$) zwischen den Mittelpunkten ($M_a$ und $M_b$) bzw. den Mittelpunkten ($M_b$ und $M_c$) können dann über folgende Formeln berechnet werden:

$$\text{Gleichung 11: } L_{1\,Ist}(\lambda, a) = \int_{t_a}^{t_b} \sqrt{(x'(t))^2 + (z'(t))^2}\,dt = \int_{t_a}^{t_b} \sqrt{1 + \frac{\pi^2\lambda^2}{4a^2}\sin^2\left(\frac{\pi}{2a}t\right)}\,dt$$

und

$$\text{Gleichung 12: } L_{2\,Ist}(\lambda, a) = \int_{t_b}^{t_c} \sqrt{(x'(t))^2 + (z'(t))^2}\,dt = \int_{t_b}^{t_c} \sqrt{1 + \frac{\pi^2\lambda^2}{4a^2}\sin^2\left(\frac{\pi}{2a}t\right)}\,dt$$

und gegenüber den vorgegebenen Längen ($L_{1\text{Soll}}$ und $L_{2\text{Soll}}$) der Sollgeometrie auf Maßhaltigkeit geprüft werden.

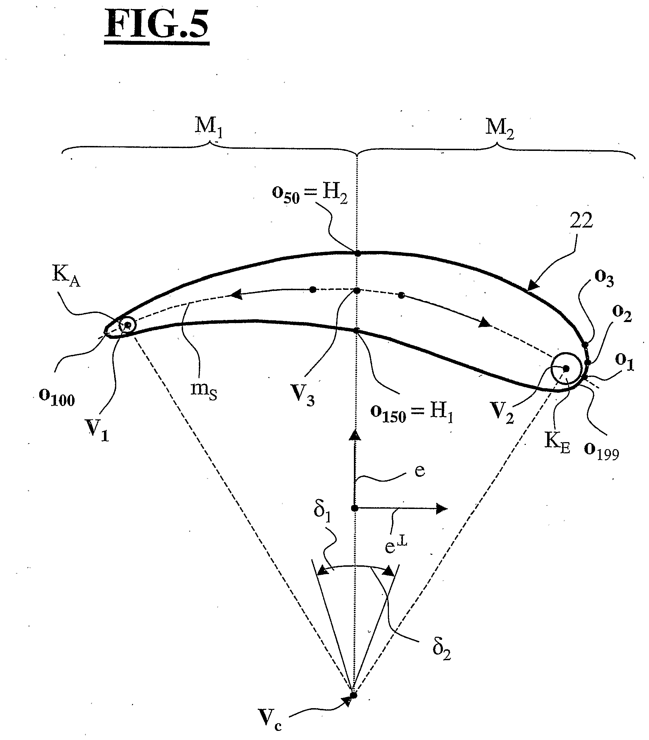

Im Zusammenhang mit Figur 5 soll nunmehr ein besonders vorteilhaftes Ausführungsbeispiel der Erfindung beschrieben werden. Hierbei geht es um die Vermessung von Turbinenschaufeln, insbesondere um die Vermessung des Profils einer Turbinenschaufel. Die Einpassung einer vorgegebenen Sollgeometrie eines Turbinenschaufelprofils in die Messpunkte eines tatsächlich gemessenen Turbinenschaufelprofils ist häufig sehr problematisch, da das tatsächlich gemessene Turbinenschaufelprofil oftmals kürzer oder länger als die vorgegebene Sollgeometrie ist; da die Toleranzen der Formabweichungen üblicherweise sehr klein sind, die zulässigen Längenabweichungen andererseits jedoch sehr groß sind, entsteht ein Widerspruch zwischen Formabweichungen und Längenabweichungen insbesondere im Bereich der spitzwinkligen Austrittskante des Turbinenschaufelprofils, so dass eine sinnvolle Einpassung der Sollgeometrie deshalb nicht möglich ist.

Um diesen Widerspruch aufzulösen, ist es notwendig, die Sollgeometrie (22) eines Turbinenschaufelprofils (siehe Figur 5), die hier durch eine Vielzahl von einzelnen Punkten ($o_j$), j=1..199 definiert ist, von denen hier der Übersichtlichkeit halber nur einige wenige bezeichnet sind, durch eine Ähnlichkeitstransformation so zu verändern, dass die Längenabweichung kompensiert wird. Dazu bietet sich eine Streckung der Sollgeometrie (22) des Turbinenschaufelprofils an. Da Turbinenschaufelprofile immer um eine vorgegebene Profilmittellinie konstruiert werden, ist eine Streckung der Sollgeometrie (22) des Turbinenschaufelprofils entlang entweder dieser Linie oder entlang einer entsprechend approximierten Linie ($m_S$) vorzunehmen, um die aerodynamischen Eigenschaften der Turbinenschaufel zu sichern.

Für eine Vielzahl von Turbinenschaufelprofilen dient eine Kreislinie als Ausgangspunkt ihrer Konstruktion, so dass die Approximation der Profilmittellinie mittels eines Kreises angemessen ist. Zur Konstruktion einer entsprechenden approximierenden Kreislinie ($m_S$) zu einer gegebenen Sollgeometrie (22) eines Profils wird das nachfolgende Verfahren verwendet.

Als erster Schritt erfolgt die klassische Einpassung zweier Kreise ($K_E$ und $K_A$) mittels der Tschebyscheff- oder des Gauss-Best-Fit-Methode in die Eintrittskante, die sich am Punkt ($o_1$) der Sollgeometrie (22) befindet bzw. die Austrittskante, die sich am Punkt ($o_{100}$) der Sollgeometrie (22) des Schaufelprofils befindet. Dazu werden in der vorgegebenen Sollgeometrie (22) entsprechende Punkte ($o_j$) im Bereich der Eintrittskante und der Austrittskante ausgewählt, in die die Kreise ($K_E$ und $K_A$) eingepasst werden. Im Ergebnis dieser Einpassung stehen die Mittelpunkte der Kreise ($K_E$ und $K_A$) als Punkte ($V_1$ und $V_2$) zur Verfügung, die bereits zwei Punkte der zu konsturierenden kreisförmigen Linie ($m_S$) darstellen. Um die kreisförmige Linie ($m_S$) erstellen zu können, ist noch ein dritter Punkt notwendig. Für die Bestimmung dieses Punktes ($V_3$) bieten sich verschiedene Verfahren an. Zum Beispiel kann bei nahezu gleichmäßiger Verteilung der die Sollgeometrie (22) definierenden Punkte ($o_j$) auf dem Turbinenschaufelprofil die Berechnung zweier Hilfspunkte ($H_1$ und $H_2$) auf der Unter- bzw. der Oberseite des Profils erhalten werden, indem derjenige Punkt ($o_j$) auf der Oberseite des Profils, und derjenige Punkt ($o_j$) auf der Unterseite des Profils verwendet wird, dessen Index (j) jeweils die Hälfte des Unterschiedes zwischen dem Punkt ($o_1$) der Eintrittskante und dem Punkt ($o_{100}$) der Austrittskante aufweist. Dies sind in dem hier bewusst einfach gehaltenen Beispiel die Punkte ($o_{50}$) und ($o_{150}$). Bei der Hälfte des Abstandes der beiden gewonnenen Hilfspunkte ($H_1$ und $H_2$) kann der dritte, noch fehlende Punkt ($V_3$) gewonnen werden.

In einem zweiten Schritt wird in die Punkte ($V_1$, $V_2$ und $V_3$) ein Kreis eingepasst, dessen Mittelpunkt ($V_c$) ist. Außerdem wird durch die Verbindungslinie des Punktes ($V_3$) mit dem Mittelpunkt ($V_c$) der Richtungsvektor ($e$) und ein hierzu senkrecht stehender Vektor ($e_\perp$) bestimmt. Mit Hilfe dieses Vektors ($e$) können nun die Punkte ($o_1$, $o_2$, ...$o_{199}$) der Sollgeometrie (22) des Turbinenschaufelprofils in die zwei Mengen ($M_1$ und $M_2$) aufgeteilt werden. Ein Punkt ($o_j$) der Sollgeometrie (22) des Turbinenschaufelprofils gehört zu ($M_1$), falls das Skalarprodukt ($o_j - V_c$)$^T e_\perp$ positiv ist, anderenfalls gehört er zur Menge ($M_2$). Die Rotation der Punkte der Mengen $M_k$, k=1,2, mit Rotationszentrum ($V_c$) erfolgt entsprechend der obigen Bedingung jeweils um den Winkel ($\delta_i$), i=1,2, wobei die Menge ($M_1$) um den Winkel ($\delta_1$) rotiert wird und die Menge ($M_2$) um den Winkel ($\delta_2$) rotiert wird.

Im Rahmen der Best-Fit-Einpassung werden die Ähnlichkeitsparameter ($\delta_i$) zur Anpassung der Sollgeometrie (22) an die Messdaten optimiert. Dazu wird auf die Punkte ($o_j$) der Mengen $M_k$, k=1,2, die Ähnlichkeitstransformation ($T(\delta_i)$) angewandt:

$$\text{Gleichung 13:} \qquad T(\delta_i, o_j) = \mathbf{B}(\delta_i)(o_j - \mathbf{V_c}) + \mathbf{V_c} = \mathbf{B}(\delta_i)o_j + (\mathbf{I} - \mathbf{B}(\delta_i))\mathbf{V_c}$$

wobei (I) die Einheitsmatrix ist und ($\mathbf{B}(\delta_i)$) eine Rotationsmatrix folgender Gestalt:

$$\text{Gleichung 14:} \qquad \mathbf{B}(\delta_i) = \begin{pmatrix} \cos(\delta_i) & \sin(\delta_i) \\ -\sin(\delta_i) & \cos(\delta_i) \end{pmatrix}.$$

Darüber hinaus erfolgt eine Rotation und eine Translation der Punkte im Sinne der Standardeinpassung unter Verwendung der Rotationsmatrix

Gleichung 15:
$$\mathbf{Q}(\gamma) = \begin{pmatrix} \cos(\gamma) & \sin(\gamma) \\ -\sin(\gamma) & \cos(\gamma) \end{pmatrix}$$

und des Translationsvektors $\mathbf{c} = \varphi\,\mathbf{e}$. Aus Gründen der numerischen Stabilität des Verfahrens ist, wie angegeben, lediglich eine Verschiebung der Nominaldaten in Richtung des Velctors ($\mathbf{e}$) zulässig. Die Gesamttransformation für die Mengen $M_k$, k=1,2, beinhaltet damit die Parameter ($\gamma$ und $\varphi$) der Standardtransformation sowie die Ähnlichkeitsparameter ($\delta_1$ bzw. $\delta_2$). Die Bildungsvorschrift für die ähnlichkeitstransformierten Punkte lautet somit:

Gleichung 16:
$$\mathbf{p}_j(\delta_i, Q, c) = \mathbf{Q}(\gamma)\,(\mathbf{B}(\delta_i)\,(\mathbf{o}_j - \mathbf{V}_c) + \mathbf{V}_c) + \mathbf{c}$$

bzw. ausführlich

Gleichung 17:

$$\mathbf{p}_j(\delta_i, \gamma, \varphi) = \begin{pmatrix} \cos(\gamma) & \sin(\gamma) \\ -\sin(\gamma) & \cos(\gamma) \end{pmatrix}\left(\begin{pmatrix} \cos(\delta_i) & \sin(\delta_i) \\ -\sin(\delta_i) & \cos(\delta_i) \end{pmatrix}(\mathbf{o}_j - \mathbf{V}_c) + \mathbf{V}_c\right) + \varphi\begin{pmatrix} e_x \\ e_y \end{pmatrix}.$$

Welcher der Ähnlichkeitsparameter $\delta_i$, $i$ = 1,2, für einen Punkt ($\mathbf{o}_j$) zur Anwendung kommt, hängt, wie oben beschrieben, von der Zugehörigkeit von ($\mathbf{o}_j$) zu den Mengen ($M_1$ bzw. $M_2$) ab.

Das erhaltene Modell besitzt vier Freiheitsgrade, die die zur Best-Fit-Einpassung zu verwendende Ähnlichkeitstransformation beschreiben.

Die Einpassung kann nunmehr derart erfolgen, indem an einer konkreten Turbinenschaufel das zu untersuchende Profil gemessen wird. Für jeden gemessenen Messpunkt wird nunmehr die Abstandsfunktion ($f(\mathbf{p}_j)$) zu einem korrespondierenden Punkt ($\mathbf{p}_j$) erstellt, der sich durch Transformation eines Punktes ($\mathbf{o}_j$) der Sollgeometrie (22) mit der Funktion $\mathbf{p}_j(\delta_i, \gamma, \varphi)$ nach Gleichung 17 ergibt. Über den oben bereits im Zusammenhang mit Gleichung 3 beschriebenen Ansatz nach Gauß, die Summe der Quadrate aller so ermittelten Abstandsfunktionen zu minimieren, können dann die Parameter ($\delta_i, \gamma, \varphi$) ermittelt werden, so dass dann jeder der Punkte ($\mathbf{o}_j$) der Sollgeometrie (22) in einen transformierten Punkt ($\mathbf{p}_j$) gemäß der Beziehung der Gleichung 17 umgerechnet werden kann. Diese Transformation der Punkte ($\mathbf{o}_j$) entsprechend den Ähnlichkeitsparametern ($\delta_1$ bzw. $\delta_2$) entspricht jedoch einer Verschiebung der Punkte ($\mathbf{o}_j$) der Sollgeometrie (22) des fluiddynamischen Profils entlang der Kreislinie ($m_S$), derart dass der Abstand der Punkte ($\mathbf{o}_j$) zur Kreislinie ($m_S$) konstant bleibt.

Der Abstand der tatsächlich gemessenen Messpunkte des Profils gegenüber den transformierten Punkten ($\mathbf{p}_j$) des Profils kann nunmehr ermittelt werden, wobei nunmehr geprüft werden kann, ob die Messpunkte insbesondere im Bereich der Austrittskante sich innerhalb der sehr eng bemessenen Toleranzen befinden.

Ein weiteres Beispiel wird anhand von den Fig. 6- 8 erläutert werden. In Fig. 6 ist hierbei die Sollgeometrie (18) eines Karoserieteils gezeigt, welches durch ein Tiefziehvorgang aus einem Metallblech gewonnen werden soll. Die Sollgeometrie ist hierbei durch ein CAD-Modell vorgegeben.

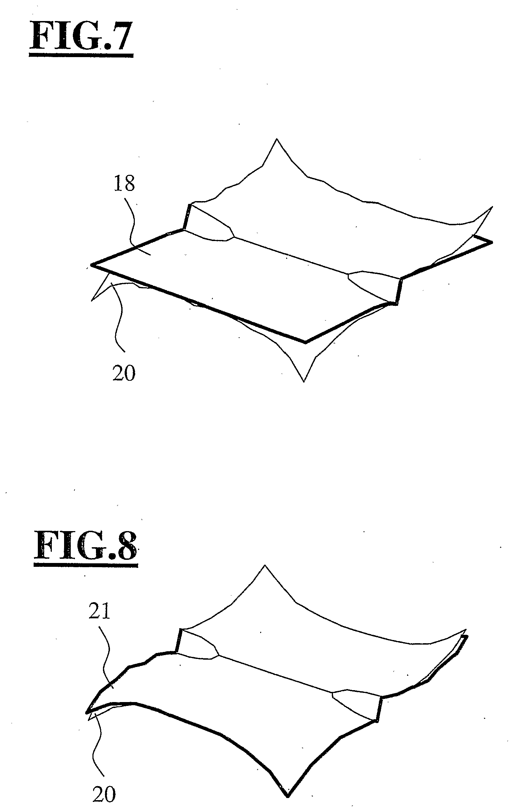

Das Hauptproblem bei diesem Vorgehen ist, dass Aufgrund der Eigenspannungen des Karosserieteils ein Zurückfedern des verformten Teils erfolgt. Dieser Effekt stört die Messdaten in einer Größenordnung, die über der zu prüfenden Höhe der in das Teil eingebrachten Kante liegt. Sind die Toleranzgrenzen für die Kante im Karoserieteil sehr klein, so kann eine Standardanpassung nicht erfolgreich sein, weil die Verformungsfehler des Teils die Fehler der Kante überlagern, bzw. verdecken. Dieser Zustand ist hierbei in Fig. 7 dargestellt. Mit dem Bezugszeichen (18) ist hierbei erneut die Sollgeometrie des zu messenden Werkstückes bezeichnet, während mit dem Bezugszeichen (20) die tatsächlichen Messpunkte des tiefgezogenen Werkstückes gezeigt sind. Um nunmehr überhaupt eine Überprüfung der gemessenen Kontur zu ermöglichen ist es daher notwendig die Sollgeometrie durch eine Ähnlichkeitstransformation an die in den Messdaten enthaltene Verformung anzupassen, wie dies Fig. 8 zeigt. Mit dem Bezugszeichen (21) ist hierbei die eingepasste Sollgeometrie (18) gezeigt, die zusätzlich über die Ähnlichkeitstransformation an das zu vermessende Werkstück angepasst wurde.

**Patentansprüche**

1. Verfahren zur Vermessung eines zu vermessenden Werkstückes (7) umfassend folgende Schritte:

   - messen von Messpunkten auf der Oberfläche des zu vermessenden Werkstückes (7) mit einem Messgerät
   - auswerten der gemessenen Messpunkte derart, dass eine vorgegebene Sollgeometrie und eine durch die gemessenen Messpunkte definierte Istgeometrie über ein Einpassungsverfahren aufeinander abgebildet werden, wobei zum Einpassen zusätzlich Transformationsparameter vorgesehen sind, die eine über die reine Skalierung der Sollgeometrie oder der Istgeometrie hinausgehende definierte Transformation der Sollgeometrie oder der Istgeometrie bezüglich einer anzustrebenden geometrischen Formänderung der Sollgeometrie oder der Istgeometrie zulassen, und wobei die zu vermessende Sollgeometrie (22) ein fluiddynamisches Profil, insbesondere ein Turbinenschaufelprofil ist,
   **dadurch gekennzeichnet, dass**
   - die Transformationsparameter ($\delta_i$) eine Verschiebung von Punkten ($\mathbf{o_j}$) der Sollgeometrie (22) entlang einer gekrümmten Verschiebelinie (ms) beschreiben, derart dass der Abstand der Punkte ($\mathbf{o_j}$) zur gekrümmten Verschiebelinie konstant ($m_S$) bleibt und
   - die Punkte ($\mathbf{o_j}$) der Sollgeometrie des fluiddynamischen Profils in zwei Teile ($M_1$, $M_2$) geteilt sind, für die unterschiedliche Transformationsparameter ($\delta_1$, $\delta_2$) zur Anwendung kommen, wobei die beiden Transformationsparameter ($\delta_1$, $\delta_2$) eine Verschiebung der Punkte ($\mathbf{o_j}$) der beiden Teile in unterschiedliche Richtungen ($\delta_1$, $\delta_2$) erlauben.

2. Verfahren nach Anspruch 1, **dadurch gekennzeichnet, dass** die gekrümmte Verschiebelinie (ms) eine Linie ist, die im wesentlichen die Mittellinie der Sollgeometrie (22) des Profils approximiert.

3. Verfahren nach Anspruch 2, **dadurch gekennzeichnet, dass** die die Mittellinie approximierende Verschiebelinie (ms) ein Kreis ist.

4. Verfahren nach einem der vorhergehenden Ansprüche, **dadurch gekennzeichnet, dass** zur Messung der Messpunkte ein Koordinatenmessgerät (12) verwendet wird.

5. Messgerät zur Vermessung von Werkstücken (7) umfassend

   - eine Messsensorik zur Messung von Messpunkten auf der Oberfläche des zu vermessenden Werkstückes (7)
   - eine Auswerteeinheit (9), zur Auswertung der gemessenen Messpunkte, bei der eine vorgegebene Sollgeometrie und die über die gemessenen Messpunkte definierte Istgeometrie über ein Einpassungsverfahren aufeinander abgebildet werden, wobei die Auswertungseinheit (9) beim Einpassungsverfahren zusätzlich Transformationsparameter verwendet, die eine über die reine Skalierung der Sollgeometrie oder der Istgeometrie hinausgehende definierte Transformation der Sollgeometrie oder der Istgeometrie bezüglich einer anzustrebenden geometrischen Formänderung der Sollgeometrie oder der Istgeometrie zulassen, und wobei die Auswertungseinheit (9) als zu vermessende Sollgeometrie (22) des Werkstückes ein fluiddynamisches Profil verwendet, insbesondere ein Turbinenschaufelprofil,
   **dadurch gekennzeichnet, dass**
   - die Transformationsparameter ($\delta_i$) eine Verschiebung von Punkten ($\mathbf{o_j}$) der Sollgeometrie (22) des fluiddynamischen Profils entlang einer gekrümmten Verschiebelinie ($m_S$) beschreiben, derart, dass der Abstand der Punkte ($\mathbf{o_j}$) zur gekrümmten Verschiebelinie (ms) konstant bleibt und
   - die Punkte ($\mathbf{o_j}$) der Sollgeometrie (22) des fluiddynamischen Profils in zwei Teile ($M_1$, $M_2$) geteilt sind, für die unterschiedliche Transformationsparameter ($\delta_1$, $\delta_2$) zur Anwendung kommen, wobei die beiden Transformationsparameter ($\delta_1$, $\delta_2$) eine Verschiebung der Punkte ($\mathbf{o_j}$) der beiden Teile in unterschiedliche Richtungen ($\delta_1$, $\delta_2$) erlauben.

6. Messgerät nach Anspruch 5, **dadurch gekennzeichnet, dass** die gekrümmte Verschiebelinie (ms) eine Linie ist, die im wesentlichen die Mittellinie der Sollgeometrie (22) des Profils approximiert

7. Messgerät nach Anspruch 6, **dadurch gekennzeichnet, dass** die die Mittellinie approximierende Verschiebelinie (ms) ein Kreis ist.

8. Messgerät nach einem der Ansprüche 5 bis 7, **dadurch gekennzeichnet, dass** das Messgerät ein Koordinatenmessgerät (12) ist.

**Claims**

1. Method for measuring a workpiece (7) to be measured, comprising the steps of:

   - measuring measurement points on the surface of the workpiece (7) to be measured using a measurement machine,
   - evaluating the measured measurement points such that a specified target geometry and an actual geometry that is defined by the measured measurement points are imaged on top of one another by a fitting technique, wherein, for the fitting, transformation parameters are additionally provided that permit a defined transformation of the target geometry or the actual geometry with respect to a desired geometric form change of the target geometry or of the actual geometry that goes beyond pure scaling of the target geometry or of the actual geometry, and wherein the target geometry (22) to be measured is a fluid-dynamic profile, in particular a turbine blade profile, **characterized in that**
   - the transformation parameters ($\delta_i$) describe a displacement of points ($o_j$) of the target geometry (22) along a curved displacement line ($m_s$) such that the distance of the points ($o_j$) from the curved displacement line ($m_s$) remains constant, and
   - the points ($o_j$) of the target geometry of the fluid-dynamic profile are divided into two parts ($M_1$, $M_2$) for which different transformation parameters ($\delta_1$, $\delta_2$) are used, wherein the two transformation parameters ($\delta_1$, $\delta_2$) permit a displacement of the points ($o_j$) of the two parts in different directions ($\delta_1$, $\delta_2$).

2. Method according to Claim 1, **characterized in that** the curved displacement line ($m_s$) is a line that substantially approximates the centre line of the target geometry (22) of the profile.

3. Method according to Claim 2, **characterized in that** the displacement line ($m_s$) that approximates the centre line is a circle.

4. Method according to one of the preceding claims, **characterized in that** a coordinate measuring machine (12) is used to measure the measurement points.

5. Measuring machine for measuring workpieces (7), comprising

   - a measurement sensor system for measuring measurement points on the surface of the workpiece (7) to be measured,
   - an evaluation unit (9) for evaluating the measured measurement points, in which a specified target geometry and the actual geometry that is defined via the measured measurement points are imaged on top of one another using a fitting technique, wherein the evaluation unit (9) in the fitting technique additionally uses transformation parameters that permit a defined transformation of the target geometry or the actual geometry with respect to a desired geometric form change of the target geometry or of the actual geometry that goes beyond pure scaling of the target geometry or of the actual geometry, and wherein the evaluation unit (9) uses a fluid-dynamic profile as the target geometry (22) to be measured of the workpiece, in particular a turbine blade profile, **characterized in that**
   - the transformation parameters ($\delta_i$) describe a displacement of points ($o_j$) of the target geometry (22) of the fluid-dynamic profile along a curved displacement line ($m_s$) such that the distance of the points ($o_j$) from the curved displacement line ($m_s$) remains constant, and
   - the points ($o_j$) of the target geometry (22) of the fluid-dynamic profile are divided into two parts ($M_1$, $M_2$) for which different transformation parameters ($\delta_1$, $\delta_2$) are used, wherein the two transformation parameters ($\delta_1$, $\delta_2$) permit a displacement of the points ($o_j$) of the two parts in different directions ($\delta_1$, $\delta_2$).

6. Measuring machine according to Claim 5, **characterized in that** the curved displacement line ($m_s$) is a line that substantially approximates the centre line of the target geometry (22) of the profile.

7. Measuring machine according to Claim 6, **characterized in that** the displacement line ($m_s$) that approximates the centre line is a circle.

8. Measuring machine according to one of Claims 5 to 7, **characterized in that** the measuring machine is a coordinate measuring machine (12).

**Revendications**

1. Procédé de mesure d'une pièce à mesurer (7), comprenant les étapes suivantes:

   - mesurer des points de mesure sur la surface de la pièce à mesurer (7) avec un appareil de mesure,
   - analyser les points de mesure mesurés, de telle manière qu'une géométrie théorique prédéterminée et une géométrie réelle définie par les points de mesure mesurés soient représentées l'une sur l'autre par un procédé d'adaptation, dans lequel il est en outre prévu pour l'adaptation des paramètres de transformation, qui permettent une transformation de la géométrie théorique ou de la géométrie réelle allant au-delà de la pure mise à l'échelle de la géométrie théorique ou de la géométrie réelle en ce qui concerne un changement de forme géométrique à atteindre de la géométrie théorique ou de la géométrie réelle, et dans lequel la géométrie théorique à mesurer (22) est un profil de dynamique des fluides, en particulier un profil d'aube de turbine,
   **caractérisé en ce que**
   - les paramètres de transformation ($\delta_i$) décrivent un déplacement de points ($o_j$) de la géométrie théorique (22) le long d'une ligne de déplacement courbe ($m_S$), de telle manière que la distance des points ($o_j$) à la ligne de déplacement courbe ($m_S$) reste constante et
   - les points ($o_j$) de la géométrie théorique du profil de dynamique des fluides sont divisés en deux parties ($M_1$, $M_2$), pour lesquelles des paramètres de transformation différents ($\delta_1$, $\delta_2$) sont utilisés, dans lequel les deux paramètres de transformation ($\delta_1$, $\delta_2$) permettent un déplacement des points ($o_j$) des deux parties dans des directions différentes ($\delta_1$, $\delta_2$).

2. Procédé selon la revendication 1, **caractérisé en ce que** la ligne de déplacement courbe (ms) est une ligne, qui s'approche essentiellement de la ligne centrale de la géométrie théorique (22) du profil.

3. Procédé selon la revendication 2, **caractérisé en ce que** la ligne de déplacement ($m_S$) approchant la ligne centrale est un cercle.

4. Procédé selon l'une quelconque des revendications précédentes, **caractérisé en ce que** l'on utilise un appareil de mesure de coordonnées (12) pour la mesure des points de mesure.

5. Appareil de mesure pour la mesure de pièces (7), comprenant

   - un dispositif capteur de mesure pour la mesure de points de mesure sur la surface de la pièce à mesurer (7),
   - une unité d'analyse (9), pour l'analyse des points de mesure mesurés, dans laquelle une géométrie théorique prédéterminée et la géométrie réelle définie par les points de mesure mesurés sont représentées l'une sur l'autre par un procédé d'adaptation, dans lequel l'unité d'analyse (9) utilise en outre lors du procédé d'adaptation des paramètres de transformation, qui permettent une transformation de la géométrie théorique ou de la géométrie réelle allant au-delà de la pure mise à l'échelle de la géométrie théorique ou de la géométrie réelle en ce qui concerne un changement de forme géométrique à atteindre de la géométrie théorique ou de la géométrie réelle, et dans lequel l'unité d'analyse (9) utilise comme géométrie théorique à mesurer (22) de la pièce un profil de dynamique des fluides, en particulier un profil d'aube de turbine,
   **caractérisé en ce que**
   - les paramètres de transformation ($\delta_i$) décrivent un déplacement de points ($o_j$) de la géométrie théorique (22) du profil de dynamique des fluides le long d'une ligne de déplacement courbe (ms), de telle manière que la distance des points ($o_j$) à la ligne de déplacement courbe ($m_S$) reste constante et
   - les points ($o_j$) de la géométrie théorique (22) du profil de dynamique des fluides sont divisés en deux parties ($M_1$, $M_2$), pour lesquelles des paramètres de transformation différents ($\delta_1$, $\delta_2$) sont utilisés, dans lequel les deux paramètres de transformation ($\delta_1$, $\delta_2$) permettent un déplacement des points ($o_j$) des deux parties dans des directions différentes ($\delta_1$, $\delta_2$).

6. Appareil de mesure selon la revendication 5, **caractérisé en ce que** la ligne de déplacement courbe (ms) est une ligne, qui s'approche essentiellement de la ligne centrale de la géométrie théorique (22) du profil.

7. Appareil de mesure selon la revendication 6, **caractérisé en ce que** la ligne de déplacement (ms) approchant la ligne centrale est un cercle.

8. Appareil de mesure selon l'une quelconque des revendications 5 à 7, **caractérisé en ce que** l'appareil de mesure est un appareil de mesure de coordonnées (12).

# FIG.1

# FIG.2

# FIG.3

# FIG.4

# FIG.6

# <u>FIG.5</u>

## FIG.7

## FIG.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0006969 A
- US 4908782 A
- US 5521847 A